# EUROPEAN PATENT APPLICATION

(11) **EP 1 946 963 A1**
(43) Date of publication of application: **23.07.2008**
(21) Application number: 08100603.3
(22) Date of filing: 17.01.2008
(51) Int. Cl.: B60P 1/38

(54) **Vehicle provided with a loading space**

(30) Priority: 17.01.2007 NL 2000440
(71) Applicant: Ancra Systems BV, 5281 PL Boxtel (NL)
(72) Inventor: van Leeuwen, Cornelis Johannes Leonardus, 2352 RH Leiderdorp (NL)
(74) Representative: Verhees, Godefridus Josephus Maria

(57) **Abstract**

A vehicle 1 has a thermally insulated loading space 3 provided with an open loading/unloading side 7 that is closed by doors 5 at the rear and an opposite end 9 at the front.

Four parallel transporting devices 15 are fastened spaced apart on the floor 11 of the loading space. These transporting devices are formed by endless plates 17 and guides 19, which guide the plates.

Driving devices 29 are fastened on the floor 11 near the end 9, for driving the plates 17. Parts 15A of the transporting devices, which extend from the end 9, gradually rise towards the end so that the driving devices 29 do not protrude above the transporting devices 15A.

## Description

### BACKGROUND OF THE INVENTION:

### Field of the invention

The invention relates to a vehicle comprising a loading space provided with an open loading/unloading side and one or more doors for opening/closing the loading/unloading side. A vehicle can be defined as both a motorised truck and a non-motorised trailer.

More in particular, the invention relates to a cooled and/or refrigerated lorry provided with a thermally insulated loading space.

### Prior art

Such a vehicle is generally known. The loading and/or unloading of such a vehicle is time consuming. It is not always a matter of course to be able to incorporate an automatic loading and unloading system, because holes and recesses have to be made in the floor and/or walls of the loading space for this purpose. This detrimentally influences the strength of the construction of the loading space. Moreover, this is a particular problem with cooled and/or refrigerated lorries with a thermally insulated loading space, because it will also affect the insulation value of the loading space. This means that extra provisions must be taken to strengthen the construction and to restore the insulation value and the vehicle often has to be reinspected.

### Summary of the invention

An objective of the invention is to provide a vehicle of the type described in the preamble, which can be easily loaded and unloaded without this affecting the strength of the construction and/or the insulation value of the loading space. For this purpose the vehicle according to the invention is characterised in that several parallel transporting devices are spaced apart on the floor of the loading space, and extend from the loading/unloading side to the opposite end of the loading space, in which driving devices are also present on the floor for at least one of the transporting devices. By installing the complete loading/unloading device, including the drive, on the floor, the walls and floor of the loading space will not be affected so that the strength and/or insulation value will not be affected. Moreover, this means the loading/unloading device can be easily installed in an existing vehicle afterwards.

An embodiment of the vehicle according to the invention is characterised in that parts of the transporting devices, which extend from this end to a distance from the loading/unloading side, gradually rise above the floor in the direction of the end, in which the driving devices are near this side. This is a favourable construction if the drive is higher than the transporting devices. By allowing the transporting devices to rise and by placing the drive next to or under the transporting devices, it is possible for the transporting devices to extend over the whole length of the loading space so that as little useful loading space as possible is lost. Moreover, this makes the useful space on the loading/unloading side as large as possible. If the load is removed by a fork-lift truck, the truck will first lift the load and then take it out. Extra height is needed for the lifting process with respect to the height available elsewhere in the loading space.

A further embodiment of the vehicle according to the invention is characterised in that the transporting devices comprise endless transport elements, which are led around near the loading/unloading side and the end, and guides over which and/or between which these transport elements run. Water, dirt and soap residues can be easily removed when cleaning the loading space if the guides are installed on the floor and not sunk into the floor.

The guiding elements are preferably plastic plates. The advantage of this is that cleaning agents have no negative influence on them, which is the case with transport chains for example.

Still a further embodiment of the vehicle according to the invention is characterised in that the guides each comprise guiding elements spaced apart, which guide the transport element sideways, in which there is at least one carrier between opposite guiding elements, which is present above the floor, and where the transport element runs over the carrier and is led back under the carrier. The guiding elements with the carrier between them can be made with an H-shaped cross-section.

Preferably there are narrower transporting devices and between them transporting devices wider than those of the latter transporting devices, nearby, between the loading/unloading side and the side walls protruding from the end of the loading space. Preferably there are two wide transporting devices between the narrow transporting devices, in which the wide transporting devices are twice as wide as the narrow transporting devices, so that each wide transport device can carry two pallets near their sides.

### Brief description of the drawings

The invention will be elucidated more fully below on the basis of drawings in which an embodiment of the vehicle according to the invention is shown as a cooled and/or refrigerated lorry. In these drawings:
Figure 1 shows an opened-out side-elevation of the cooled and/or refrigerated lorry;
Figure 2 shows an opened-out top view of the cooled and/or refrigerated lorry;
Figure 3 shows a rear view of the cooled and/or refrigerated lorry with open doors; and
Figure 4 shows a partly open-out detail of the rear of the cooled and/or refrigerated lorry shown in figure 3.

### Detailed description of the drawings

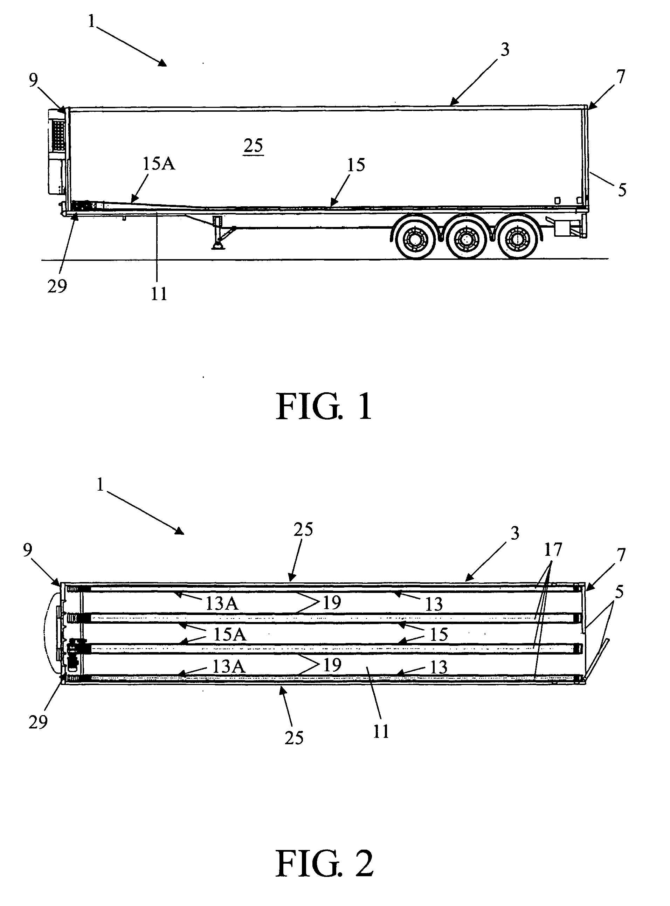

Figures 1 and 2 show an embodiment of the cooled and/or refrigerated lorry according to the invention in an opened-out side elevation and from the top respectively. The cooled and/or refrigerated lorry has a thermally insulated loading space 3 provided with an open loading/unloading side 7 closed by doors 5 at the rear and an opposite end 9 at the front.

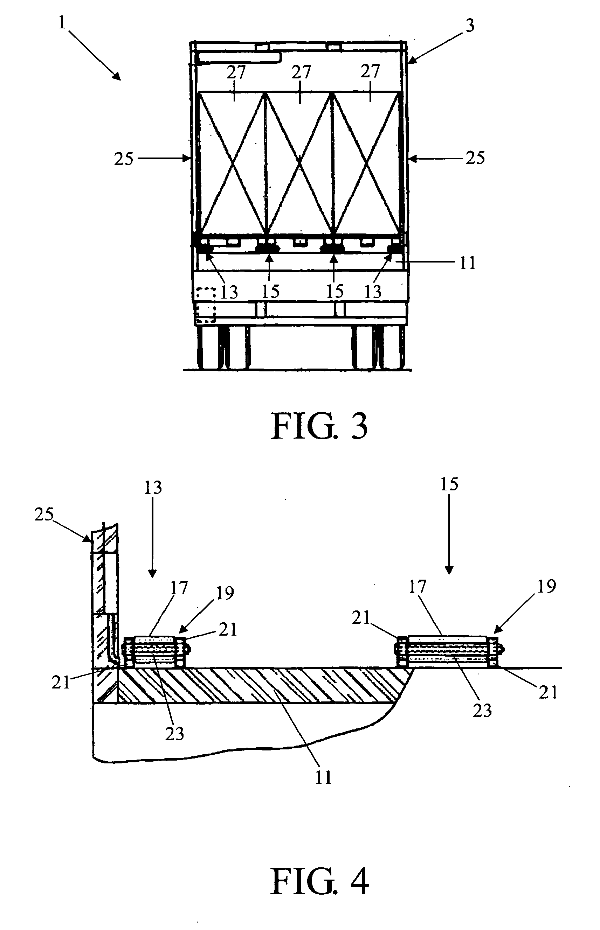

Four parallel transporting devices 13, 15 are fastened spaced apart on the floor 11 of the loading space. These transporting devices are formed by endless transport elements, made as plastic plates 17, and guides 19, which guide the plates. The guides 19 are pieces whose side walls 21 form guiding elements, which guide the plates 17 sideways, and the transverse wall between the side walls forms a carrier 23, which is present above the floor 11, see figure 4. The plates 17 run over the carrier 23 and are led between the upright side walls 21. The plates 17 are led around near the loading/unloading side 7 and the end 9, after which they run back under the carriers 23.

There are narrow transporting devices 13 near the side walls 25 of the loading space 3, and between them there are two wide transporting devices 15 twice as wide as those of the transporting devices 13 by the side walls. This means that three pallets 27 can be placed next to each other in the loading space 3, in which the wide middle transporting devices 15 can each support two pallets, see figure 3.

The transporting devices 13, 15 extend from the loading/unloading side 7 to the end 9 of the loading space 3. Driving devices 29 are fastened on the floor 11 for driving the plates 17 near the end 9. The driving devices 29 are formed by an electromotor with a reduction box. Parts 13A and 15A of the transporting devices, which extend from the end 9, gradually rise towards the end so that the driving devices 29 do not protrude above the transporting devices 13A, 15A.

Although in the above the invention is explained on the basis of the drawings, it should be noted that the invention is in no way limited to the embodiment shown in the drawings. The invention also extends to all embodiments deviating from the embodiment shown in the drawings within the context defined by the claims.

## Claims

1. Vehicle comprising a closed loading space provided with an open loading/unloading side and one or more doors for opening/closing the loading/unloading side, **characterised in that** there are several, parallel transporting devices spaced apart on the floor of the loading space, which extend from the loading/unloading side to the opposite end of the loading space, in which there are also driving devices on the floor for at least one of the transporting devices.

2. Vehicle according to claim 1, **characterised in that** parts of the transporting devices, which gradually rise from this end to a distance from the loading/unloading side in the direction of the end to a distance above the floor, in which the driving devices are present near this side.

3. Vehicle according to claim 1 or 2, **characterised in that** the transporting devices comprise endless transport elements, which are led around near the loading/unloading side and the end, and guides over which and/or between which these transport elements run.

4. Vehicle according to claim 3, **characterised in that** the guiding elements are plastic plates.

5. Vehicle according to claim 3 or 4, **characterised in that** the guides each comprise guiding elements spaced apart, which guide the transport element sideways, in which there is at least one carrier between opposite guiding elements, which is present above the floor, and in which the transport element runs over the carrier and is led back under the carrier.

6. Vehicle according to one of the preceding claims, **characterised in that** there are narrower transporting devices and between them transporting devices wider than those of the latter transporting devices, nearby, between the loading/unloading side and the side walls protruding from the end of the loading space.
